# EUROPÄISCHE PATENTSCHRIFT

(11) **EP 4 335 660 B1**
(45) Veröffentlichungstag und Bekanntmachung des Hinweises auf die Patenterteilung: **08.10.2025**
(21) Anmeldenummer: 23192580.1
(22) Anmeldetag: 22.08.2023
(51) Int. Cl.: B60C 9/09, B60C 9/18, B60C 15/00, B60C 9/06

(54) **FAHRZEUGREIFENKONSTRUKTION**
VEHICLE TIRE CONSTRUCTION
STRUCTURE DE PNEU DE VÉHICULE

(30) Priorität: 08.09.2022 DE 102022209354
(43) Veröffentlichungstag der Anmeldung: 13.03.2024
(73) Patentinhaber: Continental Reifen Deutschland GmbH, 30175 Hannover (DE)
(72) Erfinder: Vaculik, Milan, 30165 Hannover (DE)
(74) Vertreter: Continental Corporation

(56) Entgegenhaltungen:
- EP-A1- 2 716 475
- EP-A1- 3 012 123
- DE-A1- 102021 201 322
- KR-A- 20100 043 599
- US-A1- 2021 188 005

## Beschreibung

Die Erfindung betrifft einen Fahrzeugluftreifen, insbesondere für den Einsatz in der Bereifung von Vans. Offenbart wird zudem ein Fahrzeug, insbesondere ein Van, welches mit entsprechenden Fahrzeugluftreifen ausgerüstet ist.

Klassische Fahrzeugluftreifen verfügen über eine Reifenkarkasse aus einer oder mehreren Karkasslagen, deren gummierte Festigkeitsträger sich zumeist von Reifenwulst zu Reifenwulst durch die Reifenkarkasse erstrecken und dabei mit der Umfangsrichtung einen Kordwinkel von im Wesentlichen 90° einschließen. Diese Fahrzeugluftreifen werden auch als Radialreifen bezeichnet. In radialer Richtung außen zu der Reifenkarkasse weisen entsprechende Radialreifen einen Laufstreifen auf, welcher für den späteren Kontakt mit der Fahrbahn vorgesehen ist, wohingegen eine an der radial innenliegenden Seite der Reifenkarkasse angeordnete Reifeninnenschicht für die Luftdichtigkeit sorgt. Solche Radialreifen können zwischen dem Laufstreifen und der Reifenkarkasse zudem eine oder mehrere Verstärkungslagen aufweisen, beispielsweise Gürtellagen, welche wiederum gummierte Festigkeitsträger umfassen und dem Reifen unter anderem eine erhöhte Steifigkeit verleihen.

Ein wesentlicher Aspekt bei der Konzeption moderner Fahrzeugluftreifen ist dabei die Auslegung der Reifenkarkasse, an deren Aufbau verschiedene Grundanforderungen gestellt werden. Die Reifenkarkasse muss regelmäßig zumindest eine Karkasslage umfassen, die beidseitig einen Lagenumschlag aufweist, um die Wulstkerne nebst einer etwaigen Kernfahne zu umfassen und die Reifenwulst auszubilden. Solche Karkasslagen werden vom Fachmann in Abhängigkeit davon, wie weit sich das Material der Karkasslage im Lagenumschlag an der Seitenwand in Richtung des Laufstreifens erstreckt, auch als 1-Lage bzw. C-Lage bezeichnet.

Darüber hinaus wird insbesondere für Fahrzeugreifen von relativ schweren Fahrzeugen, insbesondere von Vans aber auch von Nutzfahrzeugen, wie LKWs oder Bussen, erwartet, dass die Reifenkarkasse eine gewisse Stabilität im Seitenwandbereich aufweist, was zumeist durch einen mehrlagigen Aufbau im Seitenwandbereich erreicht werden soll, wie er, bedingt durch die hohen Lagenumschläge, beispielsweise bei vielen C-Lagen vorliegt.

Trotz eines in vielen Fällen vorteilhaften Verhältnisses zwischen Seitenwandstabilität und Gesamtgewicht werden Reifenkarkassen, die lediglich eine C-Lage umfassen, häufig als insgesamt zu schwach und insbesondere im Bereich des Laufstreifens als zu anfällig für Druckdeformationen und Beschädigungen der gummierten Festigkeitsträger empfunden, womit eine Verschlechterung in den allgemeinen Leistungseigenschaften verbunden sein kann. Diese Eigenschaften können durch zusätzliche Gürtellagen zwischen der Reifenkarkasse und dem Laufstreifen in vielen Fällen nur unzureichend kompensiert werden, wobei entsprechende zusätzliche Gürtellagen auch wiederum das Gesamtgewicht des Fahrzeugluftreifens erhöhen, was mit Blick auf die Fahreigenschaften, den Rollwiderstand und den Treibstoffverbrauch regelmäßig als nachteilig empfunden wird.

Unter Gesichtspunkten der Seitenwandstabilität werden Reifenkarkassen mit einer isolierten 1-Lage (sogenannte 1+0-Konstruktionen) im Gegensatz zu Reifenkarkassen mit einer isolierten C-Lage (sogenannte C+0-Konstruktionen), häufig als nicht ausreichend empfunden, sodass diese zum Erhalt eines zweilagigen Aufbaus im Seitenwandbereich in einigen Fällen mit einer zweiten Karkasslage kombiniert werden, die sich zumindest von Wulst zu Wulst erstreckt, zur Einsparung von Material und Gewicht jedoch häufig keinen eigenen Lagenumschlag ausbildet. Eine solche Karkasslage wird auch als 3/4-Lage bezeichnet. Die resultierende Konstruktion, die auch als 1+3/4 Konstruktion bezeichnet wird, wird in vielen Fällen als besonders robust angesehen, insbesondere auch im Zentralbereich unterhalb des Laufstreifens, geht in nachteiliger Weise aber zumeist mit einem hohen Gewicht und einem in vielen Fällen hohen Rollwiderstand einher.

Beispielhafte Fahrzeugreifen mit aus dem Stand der Technik bekannten Karkass-Konstruktionen sind beispielsweise in der EP 2716475 A1, der DE 102021201322 A1, der EP 3012123 A1, der US 2021/188005 A1 und der KR 20100043599 A offenbart.

Im Lichte der vorstehenden Ausführungen besteht im Bereich der Technik ein fortgesetztes Interesse daran, verbesserte Fahrzeugreifen und insbesondere optimierte Konstruktionen für Reifenkarkassen anzugeben, die im Vergleich mit bekannten Konstruktionen wie der C+0- oder der 1+3/4-Konstruktion verbesserte Leistungseigenschaften zeigen.

Es war die primäre Aufgabe der vorliegenden Erfindung, die vorstehend beschriebenen Nachteile des Standes der Technik auszuräumen oder zumindest zu verringern.

Insbesondere war es eine Aufgabe der vorliegenden Erfindung, einen Fahrzeugluftreifen anzugeben, mit dem der Zielkonflikt zwischen einer optimalen Seitenwandrobustheit und einem günstigen Rollwiderstand sowie einem niedrigen Gewicht des Fahrzeugluftreifens verbessert werden kann. Insoweit war es eine ergänzende Aufgabe, dass die Resistenz gegen Beschädigungen und Deformationen im Bereich des Laufstreifens gegenüber C+0-Konstruktionen verbessert sein sollte.

Die anzugebenden Fahrzeugluftreifen sollten dabei wünschenswerterweise über ausgezeichnete Fahreigenschaften verfügen und dabei trotzdem besonders zeit- und kosteneffizient, insbesondere unter Materialeinsparungen, herzustellen sein.

Es war eine weitere Aufgabe der vorliegenden Erfindung, dass die anzugebenden Fahrzeugluftreifen unter Verwendung solcher Materialien und Fertigungsmethoden herstellbar sein sollten, die bereits heute in der Fertigung moderner Fahrzeugluftreifen zum Einsatz kommen.

Es war vor diesem Hintergrund eine ergänzende Aufgabe der vorliegenden Erfindung, bevorzugte Ausgestaltungen anzugeben, mit denen sich die Resistenz der anzugebenden Fahrzeugluftreifen gegen mechanische Beschädigungen weiter erhöhen lässt und die eine spezifische Anpassung der anzugebenden Fahrzeugluftreifen auf verschiedene Belastungsszenarien ermöglichen, sodass die anzugebenden Fahrzeugluftreifen gezielt für besonders anspruchsvolle Anwendungen ausgelegt werden können.

Die Erfinder der vorliegenden Erfindung haben nunmehr gefunden, dass die vorstehend beschriebenen Aufgaben überraschenderweise gelöst werden können, wenn in einer Reifenkarkasse eine C-Karkasslage mit einem sehr ausgeprägten Lagenumschlag, welcher sich bis in den Bereich unterhalb des Laufstreifens erstreckt, mit einer zweiten, stark verkürzten Karkasslage kombiniert wird, welche weitgehend bzw. vollständig unterhalb des Laufstreifens angeordnet ist, wie es in den Ansprüchen definiert ist, wobei durch die relative Anordnung der beiden Karkasslagen zueinander die spezifische Anpassung der entsprechenden Fahrzeugluftreifen auf verschiedene Belastungsszenarien ermöglicht wird. Nach Erkenntnis des Erfinders lassen sich hierdurch überraschenderweise ausgezeichnete Fahreigenschaften und ein niedriges Reifengewicht realisieren, wobei die entsprechenden Fahrzeugluftreifen durch ihr Eigenschaftsprofil besonders für Anwendungen im Bereich der Vans bzw. der Nutzfahrzeuge geeignet sind.

Die vorstehend genannten Aufgaben werden somit durch den Gegenstand der Erfindung gelöst, wie er in den Ansprüchen definiert ist. Bevorzugte erfindungsgemäße Ausgestaltungen ergeben sich aus den Unteransprüchen und den nachfolgenden Ausführungen.

Solche Ausführungsformen, die nachfolgend als bevorzugt bezeichnet sind, werden in besonders bevorzugten Ausführungsformen mit Merkmalen anderer als bevorzugt bezeichneter Ausführungsformen kombiniert. Ganz besonders bevorzugt sind somit Kombinationen von zwei oder mehr der nachfolgend als besonders bevorzugt bezeichneten Ausführungsformen. Ebenfalls bevorzugt sind Ausführungsformen, in denen ein in irgendeinem Ausmaß als bevorzugt bezeichnetes Merkmal einer Ausführungsform mit einem oder mehreren weiteren Merkmalen anderer Ausführungsformen kombiniert wird, die in irgendeinem Ausmaß als bevorzugt bezeichnet werden. Merkmale bevorzugter Fahrzeuge ergeben sich aus den Merkmalen bevorzugter Fahrzeugluftreifen.

Die Erfindung betrifft einen Fahrzeugluftreifen, umfassend:
a) eine Reifenkarkasse mit einem ersten Wulstelement und einem zweiten Wulstelement, umfassend eine erste Karkasslage und eine zweite Karkasslage, wobei die erste Karkasslage und die zweite Karkasslage eine Vielzahl von gummierten Festigkeitsträgern umfassen, wobei die gummierten Festigkeitsträger der ersten Karkasslage und der zweiten Karkasslage bezogen auf die Umfangsrichtung des Fahrzeugluftreifens einen Kordwinkel im Bereich von 78° bis 90° aufweisen,
b) eine relativ zur Reifenkarkasse radial innenliegende Reifeninnenschicht, und
c) einen relativ zur Reifenkarkasse radial außenliegenden Laufstreifen, mit einem für den Fahrbahnkontakt vorgesehenen Aufstandsbereich,

wobei die erste Karkasslage einen zwischen dem ersten Wulstelement und dem zweiten Wulstelement verlaufenden Zentralteil sowie einen ersten Lagenumschlag um das erste Wulstelement und einen zweiten Lagenumschlag um das zweite Wulstelement aufweist, wobei das Ende des ersten Lagenumschlags und das Ende des zweiten Lagenumschlags so angeordnet sind, dass der erste Lagenumschlag und der zweite Lagenumschlag abschnittsweise zwischen dem Zentralteil und dem Aufstandsbereich des Laufstreifens angeordnet sind,
dadurch gekennzeichnet, dass die zweite Karkasslage zu 90 % oder mehr zwischen der Reifeninnenschicht und dem Aufstandsbereich des Laufstreifens angeordnet ist, bezogen auf die Breite der zweiten Karkasslage quer zur Umfangsrichtung.

Fahrzeugluftreifen, welche über eine Reifenkarkasse mit zumindest einer Karkasslage verfügen, sind dem Fachmann aus dem Stand der Technik bekannt. Für den Fachmann ist es bedingt durch den Aufbau und die Anordnung der Karkasslage zwanglos möglich, Karkasslagen von sonstigen Verstärkungslagen im Reifen zu unterscheiden.

Karkasslagen umfassen regelmäßig eine Vielzahl an gummierten Festigkeitsträgern, welche sich zumeist in einem Kordwinkel von etwa 90°, d.h. jeweils parallel zu der radialen Richtung, durch die Reifenkarkasse erstrecken. Erfindungsgemäß ist entsprechend auch ein erfindungsgemäßer Fahrzeugluftreifen, wobei die erste Karkasslage und die zweite Karkasslage eine Vielzahl von gummierten Festigkeitsträgern umfassen, wobei sich die gummierten Festigkeitsträger bevorzugt quer zur Umfangsrichtung durch die jeweilige Karkasslage erstrecken.

Hinsichtlich der Materialauswahl der Festigkeitsträger ist die vorliegende Erfindung vorteilhafterweise sehr flexibel. Bevorzugt ist dabei ein erfindungsgemäßer Fahrzeugluftreifen, wobei die Festigkeitsträger der ersten Karkasslage und/oder der zweiten Karkasslage, bevorzugt der ersten Karkasslage und der zweiten Karkasslage, textile Festigkeitsträger, bevorzugt textile Festigkeitsträger mit zumindest einem Garn sind, wobei das Garn bevorzugt aus einem Material besteht, welches ausgewählt ist aus der Gruppe bestehend aus Aramid, Polyestern, beispielsweise Polyethylenterephthalat und Polyethylennaphtalat, Polyetherketon, Polyketon, Rayon, Viskose, Kohlefasern, Naturfasern, Glasfasern und PBO (Poly(p-phenylen-2,6-benzobisoxazol)), bevorzugt ausgewählt ist aus der Gruppe bestehend aus Aramid, Polyethylenterephthalat und Rayon.

Wiederum für im Wesentlichen alle Anwendungsfälle relevant ist ein erfindungsgemäßer Fahrzeugluftreifen, wobei die gummierten Festigkeitsträger in der ersten Karkasslage und/oder der zweiten Karkasslage, bevorzugt in der ersten Karkasslage und der zweiten Karkasslage, von einem Gummierungswerkstoff umgeben sind, wobei der Gummierungswerkstoff herstellbar ist durch Vulkanisation einer vulkanisierbaren Kautschukmischung, wobei die vulkanisierbare Kautschukmischung bevorzugt zumindest einen Dienkautschuk und zumindest einen Füllstoff umfasst.

Hinsichtlich der im Zuge der Vulkanisation zwischen den Karkasslagen erreichbaren Verbundfestigkeit ist es nach Einschätzung der Erfinder vorteilhaft, wenn die Gummierungen der Festigkeitsträger in der Reifenkarkasse möglichst ähnlich ausgeführt werden. Bevorzugt ist entsprechend ein erfindungsgemäßer Fahrzeugluftreifen, wobei der Gummierungswerkstoff der ersten Karkasslage und der zweiten Karkasslage herstellbar ist durch Vulkanisation von vulkanisierbaren Kautschukmischungen, die die gleichen Dienkautschuke und/oder die gleichen Füllstoffe, bevorzugt die gleichen Dienkautschuke und die gleichen Füllstoffe, umfassen, besonders bevorzugt in den gleichen Massenanteilen.

Im Rahmen der Erfindung werden einige Elemente, bei denen es sich nicht um Karkasslagen handelt, jeweils als erste und zweite Elemente definiert, beispielsweise das erste und das zweite Wulstelement. Der Fachmann versteht, dass Fahrzeugluftreifen in der überwiegenden Zahl der Fälle zu einem großen Teil symmetrisch aufgebaut sind. Hieraus folgt, dass komplementäre Elemente häufig aus ähnlichen bzw. gleichen Materialien aufgebaut sind und/oder ähnliche bzw. identische Dimensionen aufweisen. Entsprechend ist es im Rahmen der vorliegenden Erfindung bei sämtlichen Merkmalen, die für ein erstes und ein zweites Element offenbart werden, beispielsweise für das erste Wulstelement und das zweite Wulstelement, explizit bevorzugt, wenn das entsprechende Merkmal auf beide Seiten des Fahrzeugluftreifens, d.h. für das erste und das zweite Element, realisiert wird, besonders bevorzugt in der gleichen Art und Weise.

Der erfindungsgemäße Fahrzeugluftreifen verfügt beidseitig über eine Reifenwulst, die dafür vorgesehen ist, bei der Anbringung des Fahrzeugluftreifens auf einer Felge für die notwendige Stabilität zu sorgen. Die jeweilige Reifenwulst wird gebildet, indem die erste Karkasslage der Reifenkarkasse um das jeweilige Wulstelement herumgeschlagen wird. Durch diesen Umschlag wird jeweils ein sogenannter Lagenumschlag gebildet, der sich entlang der Seitenwand der Reifenkarkasse wieder in radialer Richtung nach außen erstreckt. Das Wulstelement umfasst regelmäßig einen Wulstkern sowie in vielen Fällen auch eine sogenannte Kernfahne aus einem relativ steifen Gummiwerkstoff. Für die meisten Ausgestaltungen relevant ist somit ein erfindungsgemäßer Fahrzeugluftreifen, wobei das erste Wulstelement und/oder das zweite Wulstelement, bevorzugt beide Wulstelemente, einen Wulstkern, bevorzugt einen Wulstkern mit einer daran angeordneten Kernfahne, umfassen, bevorzugt daraus bestehen.

Zum Zwecke einer klaren Abgrenzung der Lagenumschläge von den sonstigen Teilen der ersten Karkasslage wird der sich zwischen den Wulstelementen erstreckende Teil der ersten Karkasslage im Rahmen der vorliegenden Erfindung als Zentralteil bezeichnet, so dass der Zentralteil den Teil der ersten Karkasslage umfasst, der nicht Teil eines Lagenumschlages ist.

Gemäß dem üblichen Aufbau von Fahrzeugluftreifen umfasst der erfindungsgemäße Fahrzeugluftreifen neben der Reifenkarkasse auch einen Laufstreifen mit einem für den Fahrbahnkontakt vorgesehenen Aufstandsbereich und eine Reifeninnenschicht, durch die die Luftdichtigkeit erreicht wird.

In Übereinstimmung mit dem fachmännischen Verständnis handelt es sich bei den regelmäßig rotationssymmetrischen Fahrzeugluftreifen um Produkte, deren Aufbau zweckmäßigerweise relativ zu der radialen Richtung beschrieben wird, d.h. der von der Mitte des Fahrzeugluftreifens radial nach außen weisenden Richtung, sodass die radiale Richtung senkrecht auf der Rotationsachse, d.h. der axialen Richtung, des Fahrzeugluftreifens steht.

In diesem Sinne liegt der Laufstreifen entsprechend in radialer Richtung weiter außen als die Reifenkarkasse wohingegen die Innenschicht in radialer Richtung weiter innen liegt, wobei zuweilen auch verkürzt davon gesprochen wird, dass die Reifeninnenschicht an der Innenseite der Reifenkarkasse angeordnet ist bzw. dass der Laufstreifen an der Außenseite liegt. Entsprechend liegt die Reifenkarkasse abschnittsweise, d.h. im Bereich unterhalb des Laufstreifens, zwischen dem Laufstreifen und der Reifeninnenschicht.

Die Abmessungen des im Reifenbau zumeist als separate Komponente eingebrachten Laufstreifens kann beispielsweise in Abhängigkeit von dem gewählten Reifenaufbauverfahren variieren. In Übereinstimmung mit dem fachmännischen Verständnis wird der Laufstreifen jedoch immer einen Bereich umfassen, der für den Kontakt mit der Fahrbahn vorgesehen ist und welcher im späteren Einsatz, bei zulässigem Achsgewicht und ordnungsgemäßem Innendruck, die Aufstandsfläche bildet. Dieser zentrale Aufstandsbereich des Laufstreifens ist für den Fachmann in der Praxis zwanglos zu identifizieren und geht beidseitig über die sogenannten Reifenschultern in die Seitenwandbereiche über, die in den Reifenwülsten enden. Für die meisten Fälle relevant ist dabei ein erfindungsgemäßer Fahrzeugluftreifen, wobei der Laufstreifen auf der radial außenliegenden Oberfläche ein Profil aufweist.

Im Rahmen der Erfindung werden die Anordnung einiger Elemente in Übereinstimmung mit dem üblichen Vorgehen im Bereich der Technik relativ zu diesem Aufstandsbereich des Laufstreifens definiert.

Insbesondere ist die erste Karkasslage im Rahmen der vorliegenden Erfindung so ausgebildet, dass sie besonders hohe Lagenumschläge aufweist. Der um die Wulstelemente herumgelegte Teil der ersten Karkasslage ist nämlich jeweils so ausgelegt, dass die Enden der Lagenumschläge unterhalb des Aufstandsbereichs des Laufstreifens liegen, so dass die Lagenumschläge abschnittsweise, d.h. in ihrem Endbereich, zwischen dem Zentralteil der ersten Karkasslage und dem Aufstandsbereich des Laufstreifens angeordnet sind. Mit anderen Worten handelt es sich somit um eine C-Lage, deren Lagenumschläge bis in den Bereich der Reifenaufstandsfläche hochgezogen werden, so dass die erste Karkasslage unterhalb des Aufstandsbereichs des Laufstreifens teilweise doppellagig ausgebildet ist.

Diese spezifische Anordnung der ersten Karkasslage wird zur Erreichung der vorteilhaften Reifenkonstruktion mit einer spezifisch ausgeführten zweiten Karkasslage kombiniert, die nicht nur keinen Lagenumschlag ausbildet, sondern auch deutlich schmaler ist als typische 3/4-Lagen, so dass sie weitgehend unterhalb des Aufstandsbereichs des Laufstreifens angeordnet ist und sich nur in geringem Umfang in die Schulter- bzw. Seitenwandbereiche des Fahrzeugreifens erstreckt.

Eine weitere relevante Bezugsrichtung, mit der der Fachmann regelmäßig den Aufbau entsprechender Fahrzeugluftreifen beschreibt und die zum Ausdruck dieses Umstandes besonders geeignet ist, ist die Umfangsrichtung des Fahrzeugluftreifens. In Übereinstimmung mit dem fachmännischen Verständnis handelt es sich hierbei an jedem Punkt des Kreisumfanges um die jeweilige Kreistangente, die mit der radialen Richtung, d.h. der Verbindung zwischen dem jeweiligen Punkt und dem Mittelpunkt des Reifens sowie der axialen Richtung einen rechten Winkel einschließt. Im Rahmen der vorliegenden Erfindung erstreckt sich die Breite der Karkasslagen quer zu dieser Umfangsrichtung, wobei diese Definition es ermöglicht, die gewölbte Anordnung der Karkasslagen im Reifenaufbau zu berücksichtigen, so dass die Breite der Karkasslagen, insbesondere der zweiten Karkasslage, von einem Ende zum anderen Ende entlang der durch die Reifenform vorgegebenen Form angegeben werden kann.

Die entsprechende schmale zweite Karkasslage wird von den Erfindern in Anlehnung an die Nomenklatur der 1- bzw. 3/4-Lagen auch als 1/2-Lage bezeichnet, so dass der spezifische Aufbau der Reifenkarkasse erfindungsgemäßer Fahrzeugluftreifen von den Erfindern verkürzt auch als C+1/2-Konstruktion bezeichnet wird.

Nach Einschätzung der Erfinder ist es insbesondere diese spezifische Kombination von sehr unterschiedlichen Karkasslagen, die die Vorteile des erfindungsgemäßen Fahrzeugluftreifens bedingt. Auch wenn es theoretisch möglich ist, neben den zwei vorstehend definierten Karkasslagen noch weitere Karkasslagen vorzusehen, ist es mit Blick auf die erreichbaren Gewichtseinsparungen und angesichts der bereits mit diesem Aufbau erreichbaren Eigenschaften bevorzugt, keine weiteren Karkasslagen einzusetzen. Besonders bevorzugt ist entsprechend ein erfindungsgemäßer Fahrzeugluftreifen, wobei die Reifenkarkasse genau zwei Karkasslagen umfasst.

Vor dem Hintergrund des zumeist symmetrischen Aufbaus von Fahrzeugreifen ist es dabei abgesehen von einigen spezialisierten Anwendungen nach Einschätzung der Erfinder zweckmäßig, wenn die Karkasslagen jeweils im Wesentlichen mittig positioniert und an beiden Seiten im Wesentlichen in gleicher Weise ausgebildet ist. Für die überwiegende Zahl der denkbaren Anwendungsfälle relevant ist entsprechend ein erfindungsgemäßer Fahrzeugluftreifen, wobei die erste Karkasslage und/oder die zweite Karkasslage, bevorzugt die erste Karkasslage und die zweite Karkasslage, besonders bevorzugt die gesamte Reifenkarkasse, spiegelsymmetrisch an einer orthogonal zur axialen Richtung stehende Spiegelebene ist. Für die überwiegende Zahl der denkbaren Anwendungsfälle relevant ist ebenso ein erfindungsgemäßer Fahrzeugluftreifen, wobei der erste Lagenumschlag und der zweite Lagenumschlag die gleiche Länge aufweisen, so dass das Ende des ersten Lagenumschlags und das Ende des zweiten Lagenumschlags in radialer Richtung auf gleicher Höhe liegen. Bevorzugt ist auch ein erfindungsgemäßer Fahrzeugluftreifen, wobei die zweite Karkasslage so angeordnet ist, dass der Abstand der zweiten Karkasslage zum ersten Wulstelement und der Abstand der zweiten Karkasslage zum zweiten Wulstelement identisch sind.

Den Erfindern ist es gelungen, für die Positionierung der Enden der Lagenumschläge sowie die Auslegung der zweiten Karkasslage Ausgestaltungen zu identifizieren, mit denen sich der Zielkonflikt zwischen einer optimalen Seitenwandrobustheit und einem günstigen Rollwiderstand sowie einem niedrigen Gewicht des Fahrzeugluftreifens, nach Einschätzung der Erfinder besonders gut lösen lässt. Die Lagenumschläge sollten nämlich ausreichend stark, aber auch nicht zu weit unter den Laufstreifen gezogen werden. Für die zweite Karkasslage ist es hingegen wünschenswert, wenn diese möglichst weitgehend unterhalb des Aufstandsbereichs des Laufstreifens angeordnet ist. Bevorzugt ist entsprechend zunächst ein erfindungsgemäßer Fahrzeugluftreifen, wobei das Ende des ersten Lagenumschlags so angeordnet ist, dass der erste Lagenumschlag über eine Länge im Bereich von 5 bis 30 %, bevorzugt im Bereich von 7,5 bis 25 % besonders bevorzugt im Bereich von 10 bis 20 %, zwischen dem Zentralteil und dem Aufstandsbereich des Laufstreifens angeordnet ist, bezogen auf die Länge des ersten Lagenumschlags, und/oder wobei das Ende des zweiten Lagenumschlags so angeordnet ist, dass der zweite Lagenumschlag über eine Länge im Bereich von 5 bis 30 %, bevorzugt im Bereich von 7,5 bis 25 % besonders bevorzugt im Bereich von 10 bis 20 %, zwischen dem Zentralteil und dem Aufstandsbereich des Laufstreifens angeordnet ist, bezogen auf die Länge des zweiten Lagenumschlags. Bevorzugt ist zusätzlich oder alternativ ein erfindungsgemäßer Fahrzeugluftreifen, wobei die zweite Karkasslage zu 95 % oder mehr, bevorzugt zu 98 % oder mehr, besonders bevorzugt zu 99 % oder mehr, ganz besonders bevorzugt im Wesentlichen vollständig, zwischen der Reifeninnenschicht und dem Aufstandsbereich des Laufstreifens angeordnet ist, bezogen auf die Breite quer zur Umfangsrichtung.

Die Erfinder haben gefunden, dass sich die Eigenschaften erfindungsgemäßer Fahrzeugluftreifen in vorteilhafter Weise durch die Anordnung der zwei Karkasslagen zueinander einstellen lässt.

Insoweit sehen die Erfinder die erste Entscheidung darin, ob die zweite Karkasslage in radialer Richtung unterhalb oder oberhalb des Zentralteils der ersten Karkasslage positioniert werden soll, wobei letzteres nach Einschätzung der Erfinder die Möglichkeiten zur Einbeziehung der Lagenumschläge verbessert und daher inhärent etwas stärker bevorzugt ist. Bevorzugt ist somit ein erfindungsgemäßer Fahrzeugluftreifen, wobei die zweite Karkasslage relativ zum Zentralteil der ersten Karkasslage in radialer Richtung außen liegt. Bevorzugt ist alternativ ein erfindungsgemäßer Fahrzeugluftreifen, wobei die zweite Karkasslage relativ zum Zentralteil der ersten Karkasslage in radialer Richtung innen liegt.

Eine zweite Grundentscheidung sehen die Erfinder darin, ob sich die Lagenumschläge und die zweite Karkasslage jeweils so weit erstrecken sollen, dass sie abschnittsweise übereinanderliegen, oder ob eine solche Überlappung vermieden werden soll.

Nach Einschätzung der Erfinder resultiert eine entsprechende Überlappung in einer besonders vorteilhaften Stabilität, insbesondere wenn die daraus resultierenden Bereiche der Reifenkarkasse mit zumindest drei Lagen an Karkassmaterial, d.h. der zweiten Karkasslage sowie dem Zentralteil und dem Lagenumschlag der ersten Karkasslage, in den Schulterbereichen der Reifen ausgebildet werden.

Insoweit sehen die Erfinder eine erste besonders vorteilhafte Ausgestaltung darin, wenn die zweite Karkasslage in radialer Richtung über die jeweiligen Lagenumschläge geführt wird, so dass die Enden der Lagenumschläge zwischen dem Zentralteil der ersten Karkasslage und der zweiten Karkasslage angeordnet sind. Bevorzugt ist entsprechend ein erfindungsgemäßer Fahrzeugluftreifen, wobei die zweite Karkasslage abschnittsweise relativ zum ersten Lagenumschlag in radialer Richtung außen liegt, und/oder wobei die zweite Karkasslage abschnittsweise relativ zum zweiten Lagenumschlag in radialer Richtung außen liegt. Besonders bevorzugt ist dabei ein erfindungsgemäßer Fahrzeugluftreifen, wobei die zweite Karkasslage bezogen auf die Breite der zweiten Karkasslage quer zur Umfangsrichtung über 5 bis 25 %, bevorzugt über 10 bis 20 %, relativ zum jeweiligen Lagenumschlag in radialer Richtung außen liegt. Besonders bevorzugt ist zusätzlich oder alternativ ein erfindungsgemäßer Fahrzeugluftreifen, wobei die zweite Karkasslage quer zur Umfangsrichtung über eine Breite von 10 mm oder mehr, bevorzugt 15 mm oder mehr, besonders bevorzugt 20 mm oder mehr, relativ zum jeweiligen Lagenumschlag in radialer Richtung außen liegt.

Nach Einschätzung der Erfinder wird ein besonders vorteilhafter Aufbau jedoch dann erhalten, wenn die Enden der zweiten Karkasslage zwischen dem Zentralteil der ersten Karkasslage und den jeweiligen Lagenumschlägen fixiert werden. Bevorzugt ist ein erfindungsgemäßer Fahrzeugluftreifen, wobei die zweite Karkasslage abschnittsweise zwischen dem Zentralteil und dem ersten Lagenumschlag angeordnet ist, und/oder wobei die zweite Karkasslage abschnittsweise zwischen dem Zentralteil und dem zweiten Lagenumschlag angeordnet ist. Besonders bevorzugt ist insoweit ein erfindungsgemäßer Fahrzeugluftreifen, wobei die zweite Karkasslage bezogen auf die Breite der zweiten Karkasslage quer zur Umfangsrichtung über 5 bis 25 %, bevorzugt über 10 bis 20 %, zwischen dem Zentralteil und dem jeweiligen Lagenumschlag angeordnet ist. Besonders bevorzugt ist zusätzlich oder alternativ ein erfindungsgemäßer Fahrzeugluftreifen, wobei die zweite Karkasslage quer zur Umfangsrichtung über eine Breite von 10 mm oder mehr, bevorzugt 15 mm oder mehr, besonders bevorzugt 20 mm oder mehr, zwischen dem Zentralteil und dem jeweiligen Lagenumschlag angeordnet ist.

Bei Anordnung der zweiten Karkasslage unterhalb der ersten Karkasslage sind vergleichbare Überlappungsgrade bevorzugt. Bevorzugt ist nämlich ein erfindungsgemäßer Fahrzeugluftreifen, wobei die zweite Karkasslage abschnittsweise relativ zum ersten Lagenumschlag und zum Zentralteil in radialer Richtung innen liegt und/oder wobei die zweite Karkasslage abschnittsweise relativ zum zweiten Lagenumschlag und zum Zentralteil in radialer Richtung innen liegt. Besonders bevorzugt ist insoweit ein erfindungsgemäßer Fahrzeugluftreifen, wobei die zweite Karkasslage bezogen auf die Breite der zweiten Karkasslage quer zur Umfangsrichtung über 5 bis 25 %, bevorzugt über 10 bis 20 %, relativ zu dem Zentralteil und dem jeweiligen Lagenumschlag in radialer Richtung innen liegt. Besonders bevorzugt ist zusätzlich oder alternativ ein erfindungsgemäßer Fahrzeugluftreifen, wobei die zweite Karkasslage quer zur Umfangsrichtung über eine Breite von 10 mm oder mehr, bevorzugt 15 mm oder mehr, besonders bevorzugt 20 mm oder mehr, relativ zu dem Zentralteil und dem jeweiligen Lagenumschlag in radialer Richtung innen liegt.

Als leistungsfähige Alternative zu den Ausführungsformen mit einem abschnittweise zumindest dreilagigen Aufbau erachten die Erfinder Ausführungsformen, in denen die zweite Karkasslage mit einer so geringen Breite ausgeführt wird, dass diese nicht mit den Lagenumschlägen überlappt. Nach Einschätzung der Erfinder sind solche erfindungsgemäßen Fahrzeugreifen insbesondere hinsichtlich der realisierbaren Gewichtseinsparungen besonders bevorzugt. Bevorzugt ist vor diesem Hintergrund zunächst ein erfindungsgemäßer Fahrzeugluftreifen, wobei die zweite Karkasslage quer zur Umfangsrichtung eine Breite im Bereich von 0,4*A bis 0,9*A, bevorzugt im Bereich von 0,5*A bis 0,8*A, aufweist, wobei A der Abstand zwischen dem Ende des ersten Lagenumschlags und dem Ende des zweiten Lagenumschlags ist. Bevorzugt ist zusätzlich oder alternativ ein erfindungsgemäßer Fahrzeugluftreifen, wobei die zweite Karkasslage Quer zur Umfangsrichtung einen Abstand vom Ende des ersten Lagenumschlags im Bereich von 0,2*A bis 0,45*A, bevorzugt im Bereich von 0,25*A bis 0,4*A, aufweist, wobei A der Abstand zwischen dem Ende des ersten Lagenumschlags und dem Ende des zweiten Lagenumschlags ist. Bevorzugt ist alternativ oder zusätzlich ein erfindungsgemäßer Fahrzeugluftreifen, wobei die zweite Karkasslage Quer zur Umfangsrichtung einen Abstand vom Ende des zweiten Lagenumschlags im Bereich von 0,2*A bis 0,45*A, bevorzugt im Bereich von 0,25*A bis 0,4*A, aufweist, wobei A der Abstand zwischen dem Ende des ersten Lagenumschlags und dem Ende des zweiten Lagenumschlags ist.

Der Fachmann versteht, dass sowohl bei der Einstellung einer Überlappung der zweiten Karkasslage mit den Lagenumschlägen als auch beim Einsatz von zweiten Karkasslagen mit verringerter Breite eine Reifenkarkasse erhalten wird, die zumindest potentiell eine unebene Oberfläche aufweist, die beispielsweise durch Unebenheiten verursacht werden, die durch das Überlappen von Karkasslagen erzeugt werden. Auch wenn dies in vielen Fällen unproblematisch ist, kann dadurch in einigen Fällen der Herstellungsprozess erschwert werden. Zudem ist es möglich, dass weitere Reifenbestandteile wie beispielsweise Gürtellagen nicht optimal auf der Karkasse platziert werden können. Zur Lösung dieses Problems schlagen die Erfinder vor, dass in den Überlappungs- bzw. Randbereichen der Karkasslagen selektiv Gummielemente eingesetzt werden können, die in der Praxis selbst bevorzugt keine Festigkeitsträger umfassen werden.

Bevorzugt ist zum Ausgleich von Unebenheiten in Folge einer überlappenden Anordnung der zweiten Karkasslage und der Lagenumschläge insoweit ein erfindungsgemäßer Fahrzeugluftreifen, wobei der Fahrzeugluftreifen ein streifenförmiges erstes Gummielement umfasst, wobei das streifenförmige erste Gummielement abschnittsweise relativ zum ersten Lagenumschlag und abschnittsweise relativ zur zweiten Karkasslage in radialer Richtung außen liegt, und/oder wobei der Fahrzeugluftreifen ein streifenförmiges zweites Gummielement umfasst, wobei das streifenförmige zweite Gummielement abschnittsweise relativ zum zweiten Lagenumschlag und abschnittsweise relativ zur zweiten Karkasslage in radialer Richtung außen liegt.

Bevorzugt ist zum Ausgleich von Unebenheiten in Folge einer verkürzten zweiten Karkasslage ein erfindungsgemäßer Fahrzeugluftreifen, wobei das streifenförmige erste Gummielement so angeordnet ist, dass es sich quer zur Umfangsrichtung über das Ende des ersten Lagenumschlags und/oder das Ende der zweiten Karkasslage erstreckt, und/oder wobei das streifenförmige zweite Gummielement so angeordnet ist, dass es sich quer zur Umfangsrichtung über das Ende des zweiten Lagenumschlags und/oder das Ende der zweiten Karkasslage erstreckt.

Mit Blick auf die bei der Vulkanisation erreichbare Verbundfestigkeit schlagen die Erfinder beim Einsatz solcher Gummielemente vor, dass diese aus einem möglichst ähnlichen Gummiwerkstoff, bzw. einer möglichst ähnlichen vulkanisierbaren Kautschukmischung, ausgebildet werden sollten wie die Gummierungen der Festigkeitsträger in den Karkasslagen. Bevorzugt ist entsprechend ein erfindungsgemäßer Fahrzeugluftreifen, wobei das streifenförmige erste Gummielement und/oder das streifenförmige zweite Gummielement, bevorzugt das streifenförmige erste Gummielement und/oder das streifenförmige zweite Gummielement einen weiteren Gummierungswerkstoff umfassen, wobei der Gummierungswerkstoff herstellbar ist durch Vulkanisation einer vulkanisierbaren Kautschukmischung, wobei die vulkanisierbare Kautschukmischung bevorzugt zumindest einen Dienkautschuk und zumindest einen Füllstoff umfasst. Besonders bevorzugt ist insoweit ein erfindungsgemäßer Fahrzeugluftreifen, wobei die weiteren Gummierungswerkstoffe herstellbar sind durch Vulkanisation von vulkanisierbaren Kautschukmischungen, die die gleichen Dienkautschuke und/oder die gleichen Füllstoffe, bevorzugt die gleichen Dienkautschuke und die gleichen Füllstoffe, umfassen, wie die vulkanisierbaren Kautschukmischungen aus denen die erste Karkasslage und/oder die zweite Karkasslage herstellbar sind.

In der Praxis werden erfindungsgemäße Fahrzeugluftreifen nach Einschätzung der Erfinder wohl zumeist mit einer herkömmlichen radialen Karkasse hergestellt werden, bei denen die Festigkeitsträger in den Karkasslagen entsprechend einen Kordwinkel von im Wesentlichen 90° aufweisen. Die Erfinder haben jedoch gefunden, dass sich besonders vorteilhafte Fahrzeugluftreifen bei der erfindungsgemäßen Reifenkonstruktion auch dann erhalten lassen, wenn von 90° abweichende Kordwinkel eingestellt werden, da die Festigkeitsträger der zwei Karkasslagen dadurch unterhalb des Aufstandsbereichs des Laufstreifens in der Draufsicht eine Gitterstruktur ausbilden, die für eine besonders robuste Reifenkarkasse sorgt. Erfindungsgemäß ist ein erfindungsgemäßer Fahrzeugluftreifen, wobei die gummierten Festigkeitsträger der ersten Karkasslage und der zweiten Karkasslage bezogen auf die Umfangsrichtung des Fahrzeugluftreifens einen Kordwinkel im Bereich von 78° bis 90°, bevorzugt im Bereich von 78° bis 88°, besonders bevorzugt im Bereich von 78° bis 85°, aufweisen, wobei die Kordwinkel der gummierten Festigkeitsträger der ersten Karkasslage und der zweiten Karkasslage bevorzugt in unterschiedliche Richtungen weisen. In Übereinstimmung mit dem fachmännischen Verständnis ist der Kordwinkel dabei der kleinere der beiden in Umfangsrichtung weisenden Schnittwinkel der Festigkeitsträger mit der Umfangsrichtung. In der Praxis werden gegenläufige Verläufe der Festigkeitsträger alternativ zuweilen auch dadurch angegeben, dass ein bestimmter der Schnittwinkel als Referenzwinkel festgelegt wird, so dass sich je nach Ausrichtung Winkel von größer oder kleiner 90° ergeben, beispielsweise von 78° und 102° für gegenläufige Verläufe mit einer Auslenkung von jeweils 12° relativ zum idealen radialen Verlauf.

Es kann als Vorteil erfindungsgemäßer Fahrzeugluftreifen gesehen werden, dass in diesen weitere Lagen zwischen der Reifenkarkasse und dem Laufstreifen vorgesehen werden können, die eine weitere Optimierung der Leistungseigenschaften ermöglichen, auch wenn diese in vielen Fällen zu Lasten des realisierbaren Gesamtgewichtes gehen, so dass die Zahl der weiteren Lagen für viele Anwendungen eher klein gehalten werden soll. Bevorzugt ist somit zunächst ein erfindungsgemäßer Fahrzeugluftreifen, wobei zwischen dem Aufstandsbereich des Laufstreifens und der Reifenkarkasse eine oder mehrere, bevorzugt zwei oder mehr, besonders bevorzugt drei oder mehr, weitere Lagen, angeordnet sind. Besonders bevorzugt ist insoweit ein erfindungsgemäßer Fahrzeugluftreifen, wobei zumindest eine, bevorzugt zwei, der weiteren Lagen ausgewählt sind aus der Gruppe bestehend aus Gürtellagen und Bandagen, bevorzugt Gürtellagen. Besonders bevorzugt ist zusätzlich oder alternativ ein erfindungsgemäßer Fahrzeugluftreifen, wobei zumindest eine der weiteren Lagen eine Cap-Ply Lage ist.

Die Erfinder schlagen insoweit vor, dass die Breite und Anordnung der zweiten Karkasslage auf die Breite der weiteren Lagen, insbesondere eines ggf. vorhandenen Gürtelpakets, abgestimmt werden sollte, um besonders günstige Leistungseigenschaften zu erhalten. Bevorzugt ist folglich ein erfindungsgemäßer Fahrzeugluftreifen, wobei die zweite Karkasslage zu 90 % oder mehr, bevorzugt 95 % oder mehr, besonders bevorzugt 98 % oder mehr, ganz besonders bevorzugt im Wesentlichen vollständig, zwischen der Reifeninnenschicht und der oder den weiteren Lagen angeordnet ist, bezogen auf die Breite der zweiten Karkasslage quer zur Umfangsrichtung.

Offenbart wird zudem ein Fahrzeug, insbesondere ein Van, bevorzugt ein Van für 8 oder mehr Fahrgäste, besonders bevorzugt für 10 oder mehr Fahrgäste, umfassend vier oder mehr erfindungsgemäße Fahrzeugluftreifen, wobei bevorzugt sämtliche Fahrzeugreifen des Fahrzeuges erfindungsgemäße Fahrzeugluftreifen sind. Der Fachmann versteht, dass entsprechend erfindungsgemäße Fahrzeugluftreifen bevorzugt sind, bei denen es sich um Vanreifen handelt. Zudem ist die Verwendung von erfindungsgemäßen Fahrzeugluftreifen als Teil der Bereifung von Vans und Nutzfahrzeugen besonders bevorzugt.

Nachfolgend werden bevorzugte Ausführungsformen der Erfindung unter Bezugnahme auf die beiliegenden Figuren näher erläutert und beschrieben. Dabei zeigen:
- Fig. 1: eine schematische Querschnittsdarstellung eines Ausschnitts eines erfindungsgemäßen Fahrzeugluftreifens in einer ersten bevorzugten Ausführungsform;
- Fig. 2: eine schematische Querschnittsdarstellung eines Ausschnitts eines erfindungsgemäßen Fahrzeugluftreifens in einer zweiten bevorzugten Ausführungsform;
- Fig. 3: eine schematische Querschnittsdarstellung eines Ausschnitts eines erfindungsgemäßen Fahrzeugluftreifens in einer dritten bevorzugten Ausführungsform;
- Fig. 4: eine schematische Querschnittsdarstellung eines Ausschnitts eines erfindungsgemäßen Fahrzeugluftreifens in einer vierten bevorzugten Ausführungsform;
- Fig. 5: eine schematische Querschnittsdarstellung eines Ausschnitts eines erfindungsgemäßen Fahrzeugluftreifens in einer fünften bevorzugten Ausführungsform;
- Fig. 6: eine schematische Querschnittsdarstellung eines Ausschnitts eines erfindungsgemäßen Fahrzeugluftreifens in einer sechsten bevorzugten Ausführungsform;
- Fig. 7: eine schematische Querschnittsdarstellung eines Ausschnitts eines erfindungsgemäßen Fahrzeugluftreifens in einer siebten bevorzugten Ausführungsform;
- Fig. 8: eine schematische Querschnittsdarstellung eines Ausschnitts eines erfindungsgemäßen Fahrzeugluftreifens in einer achten bevorzugten Ausführungsform;
- Fig. 9: eine schematische Querschnittsdarstellung eines Ausschnitts eines erfindungsgemäßen Fahrzeugluftreifens in einer neunten bevorzugten Ausführungsform; und
- Fig. 10: eine schematische Querschnittsdarstellung eines Ausschnitts eines erfindungsgemäßen Fahrzeugluftreifens in einer zehnten bevorzugten Ausführungsform.

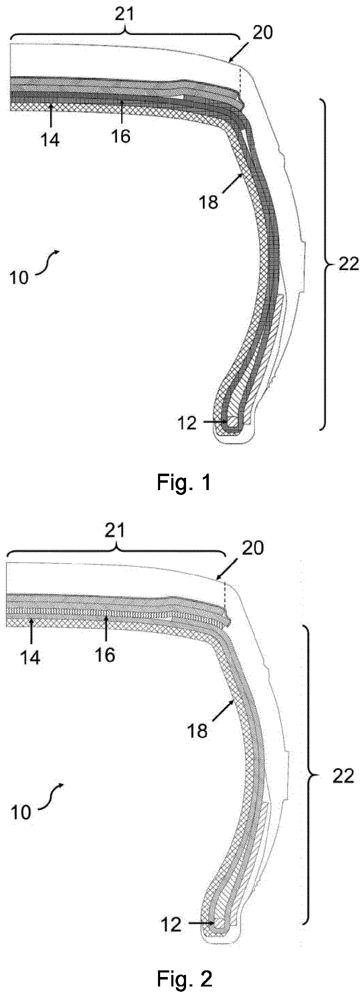

Sämtliche Fig.1 bis 10 zeigen schematische Querschnittsdarstellungen von erfindungsgemäßen Fahrzeugluftreifen 10, wobei aus Gründen der Übersichtlichkeit jeweils lediglich eine Hälfte des Fahrzeugluftreifens 10 gezeigt ist, da die verbleibende Hälfte spiegelsymmetrisch an einer orthogonal zur Umfangsrichtung stehende Spiegelebene ist und entsprechend im Wesentlichen baugleich ausgeführt ist.

Die in den Fig. 1 bis 10 gezeigten Fahrzeugluftreifen 10 umfassen jeweils radial innenliegend eine Reifeninnenschicht 18 und radial außenliegend einen Laufstreifen 20 mit einem Aufstandsbereich 21, der dazu vorgesehen ist, beispielsweise beim Einsatz des Fahrzeugluftreifens 10 an einem Fahrzeug, mit der Fahrbahnoberfläche in Kontakt zu treten. Der Laufstreifen 20 weist auf seiner Oberfläche ein Profil auf (nicht gezeigt). Zudem weisen die gezeigten Fahrzeugluftreifen 10 zwischen der Reifeninnenschicht 18 und dem Laufstreifen 20 eine Reifenkarkasse auf. Zwischen der Reifenkarkasse und dem Laufstreifen 20 sind überdies jeweils drei weitere Lagen angeordnet, wovon beispielsweise zwei der Lagen Gürtellagen sein können und eine der Lagen eine Cap-Ply Lage sein kann.

Die Reifenkarkasse weist ein erstes Wulstelement 12 und komplementär ein zweites Wulstelement (nicht gezeigt) auf, welche jeweils einen, beispielsweise hexagonalen, Wulstkern und eine daran angeordnete Kernfahne umfassen. Auf der Außenseite der durch Umfassung der Wulstelemente mit der ersten Karkasslage 14 ausgebildeten Reifenwulst ist jeweils ein Verstärkungselement vorgesehen.

Die erste Karkasslage 14 der Reifenkarkasse ist jeweils so um die Wulstelemente herumgeschlagen, dass sich ein erster Lagenumschlag 22 und ein zweiter Lagenumschlag (nicht gezeigt) bilden, wobei der Bereich der ersten Karkasslage 14, welcher zwischen dem ersten Wulstelement 12 und dem zweiten Wulstelement verläuft, als Zentralteil bezeichnet wird. Der erste Lagenumschlag 22 und der zweite Lagenumschlag weisen in den gezeigten Beispielen die gleiche Länge auf und sind jeweils bezogen auf ihre Gesamtlänge über eine Länge im Bereich von 10 bis 20 % zwischen dem Zentralteil der ersten Karkasslage und dem Aufstandsbereich 21 des Laufstreifens 20 angeordnet.

Eine zweite Karkasslage 16 der Reifenkarkasse ist, bezogen auf ihre Breite quer zur Umfangsrichtung des Fahrzeugluftreifens 10, nahezu vollständig zwischen der Reifeninnenschicht 18 und dem Aufstandsbereich 21 des Laufstreifens 20, bzw. zwischen der Reifeninnenschicht 18 und den weiteren Lagen, angeordnet. Der Abstand der zweiten Karkasslage 16 zum ersten Wulstelement 12 und zum zweiten Wulstelement ist jeweils identisch, so dass die zweite Karkasslage 16 mittig unterhalb des Laufstreifens (20) angeordnet ist. Die Reifenkarkasse weist in den gezeigten Figuren über die erste Karkasslage 14 und die zweite Karkasslage 16 hinaus, keine weiteren Karkasslagen auf.

Die erste Karkasslage 14 und die zweite Karkasslage 16 umfassen in den gezeigten Figuren jeweils eine Vielzahl von gummierten Festigkeitsträgern, welche sich quer zur Umfangsrichtung durch die jeweilige Karkasslage erstrecken und bezogen auf die Umfangsrichtung einen Kordwinkel von im Wesentlichen 90° aufweisen. Die Festigkeitsträger der ersten Karkasslage 14 und der zweiten Karkasslage 16 können beispielsweise textile Festigkeitsträger mit zumindest einem Garn aus Polyethylenterephthalat sein. Der die Festigkeitsträger umgebende Gummierungswerkstoff ist herstellbar durch Vulkanisation einer vulkanisierbaren Kautschukmischung, die für die erste Karkasslage 14 und die zweite Karkasslage 16 im gezeigten Beispiel identisch ist.

Fig. 1 zeigt eine bevorzugte Ausgestaltung eines erfindungsgemäßen Fahrzeugluftreifens 10, in dem die zweite Karkasslage 16 relativ zum Zentralteil der ersten Karkasslage 14 in radialer Richtung außen liegt und zudem bezogen auf ihre Breite quer zur Umfangsrichtung über 10 bis 20 % bzw. über eine Breite von 20 mm oder mehr, zwischen dem Zentralteil und dem ersten Lagenumschlag 22 bzw. dem zweiten Lagenumschlag angeordnet ist.

Fig. 2 zeigt eine weitere bevorzugte Ausgestaltung, wobei die zweite Karkasslage 16 relativ zum Zentralteil der ersten Karkasslage 14 ebenfalls in radialer Richtung außen liegt, allerdings bezogen auf ihre Breite quer zur Umfangsrichtung über 10 bis 20 % bzw. über eine Breite von 20 mm oder mehr, relativ zum ersten Lagenumschlag 22 bzw. zweiten Lagenumschlag in radialer Richtung außen liegt.

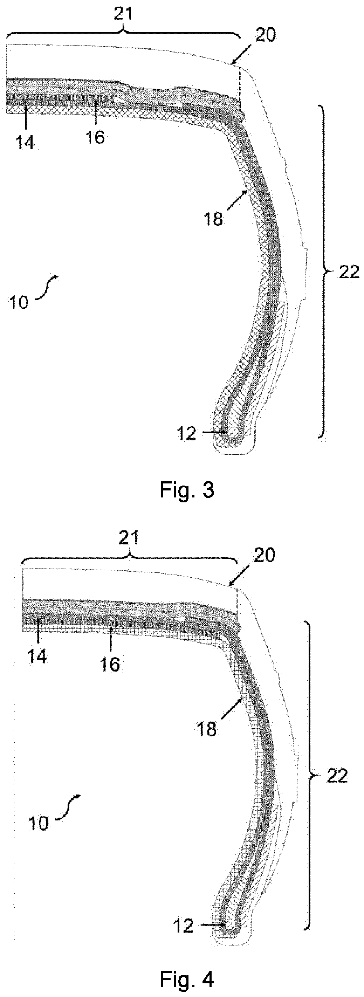

Fig. 3 zeigt eine weitere bevorzugte Ausgestaltung, in der die zweite Karkasslage 16 relativ zum Zentralteil der ersten Karkasslage 14 ebenfalls in radialer Richtung außen liegt, allerdings quer zur Umfangsrichtung eine Breite im Bereich von etwa 0,6*A bzw. jeweils einen Abstand vom Ende der Lagenumschläge aufweist von etwa 0,4*A aufweist, wobei A der Abstand zwischen dem Ende des ersten Lagenumschlags 22 und dem Ende des zweiten Lagenumschlags ist.

Fig. 4 zeigt eine alternativ bevorzugte Ausgestaltung, in der die zweite Karkasslage 16 relativ zum Zentralteil der ersten Karkasslage 14 sowie relativ zum ersten Lagenumschlag 22 und relativ zum zweiten Lagenumschlag in radialer Richtung innen liegt, in der Projektion aber mit den Lagenumschlägen überlappt.

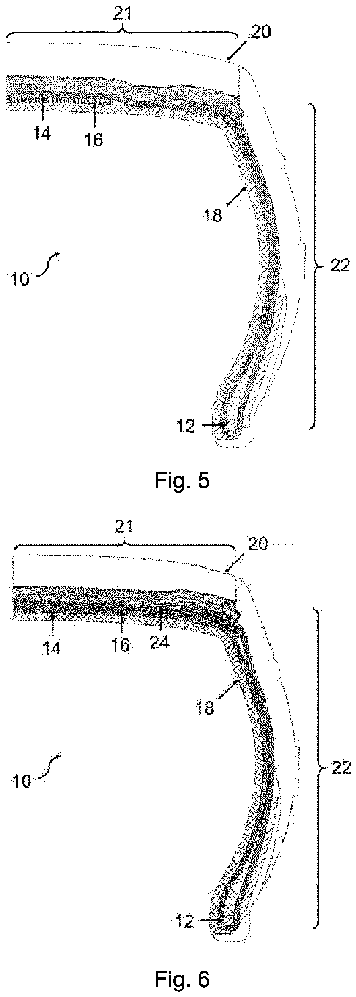

Fig. 5 zeigt eine weitere bevorzugte Ausgestaltung, in der die zweite Karkasslage 16 ebenfalls relativ zum Zentralteil der ersten Karkasslage 14 sowie relativ zu den Lagenumschlägen in radialer Richtung innen liegt, wobei sie allerdings nicht überlappend angeordnet ist, sondern wiederum eine verringerte Breite von etwa 0,6*A bzw. einen Abstand von den Enden der Lagenumschläge von etwa 0,4*A aufweist, wobei A auch in diesem Fall der Abstand zwischen dem Ende des ersten Lagenumschlags 22 und dem Ende des zweiten Lagenumschlags ist.

Die Fig. 6 bis 10 zeigen in entsprechender Reihenfolge jeweils die grundlegenden Konstruktionen der Fahrzeugluftreifen 10 der Fig. 1 bis 5, welche jeweils zusätzlich ein streifenförmiges erstes Gummielement 24 aufweisen, das jeweils abschnittsweise relativ zum ersten Lagenumschlag 22 und abschnittsweise relativ zur zweiten Karkasslage 16 in radialer Richtung außen liegt. Aufgrund des spiegelsymmetrischen Aufbaus des Fahrzeugluftreifens 10 ist in der nicht gezeigten Hälfte des Fahrzeugluftreifens 10 ein streifenförmiges zweites Gummielement in spiegelsymmetrischer Position vorhanden. Die streifenförmigen Gummielemente umfassen jeweils einen weiteren Gummierungswerkstoff, der im gezeigten Beispiel mit dem Gummiwerkstoff der Gummierung in den Karkasslagen identisch ist.

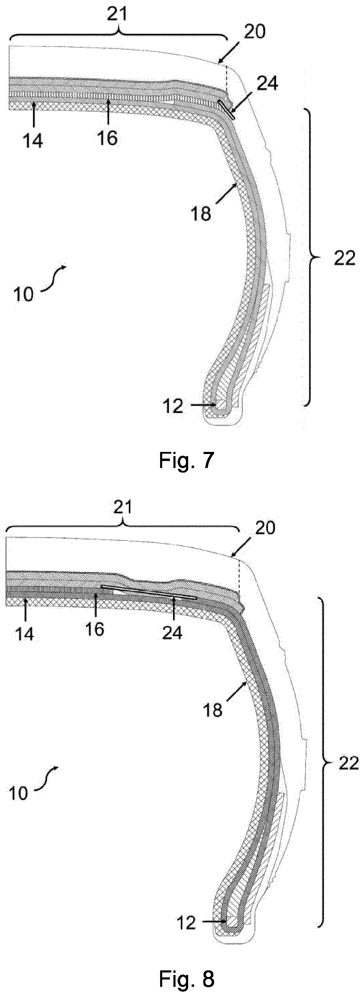

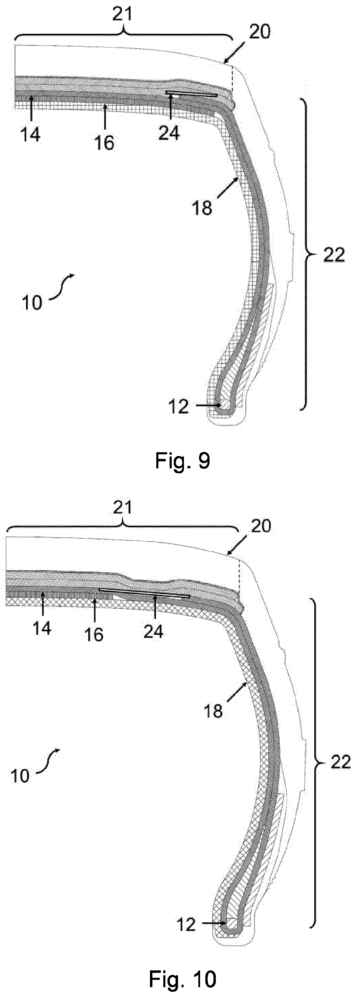

In den Fig. 6 und 9 ist das erste Gummielement 24 so angeordnet, dass es sich quer zur Umfangsrichtung über das Ende des ersten Lagenumschlags 22 erstreckt. In der Fig. 7 ist das erste Gummielement 24 so angeordnet, dass es sich quer zur Umfangsrichtung über das Ende der zweiten Karkasslage16 erstreckt. In den Fig. 8 und 10 erstreckt sich das Gummielement 24 sowohl über das Ende des ersten Lagenumschlags 22 als auch über das Ende der zweiten Karkasslage16.

Ausgehend von den vorstehend beschriebenen Konstruktionen wurden von den Erfindern drei erfindungsgemäße Fahrzeugluftreifen für einen Van mit einer Konstruktion gemäß Fig. 1 hergestellt. Durch die unterschiedliche Konstruktion konnte für erfindungsgemäße Fahrzeugluftreifen eine signifikante Materialeinsparung an Karkassmaterial von etwa 0,23 m² und eine Gewichtseinsparung von 364 g erreicht werden.

Anschließend wurden die erfindungsgemäßen Fahrzeugluftreifen in einem typischen Kolbentest ("plunger test", PL39D, Kolbengröße 19 mm, Kolbengeschwindigkeit 53 mm/min, Messtemperatur 23,6 °C, Reifendruck 575 kPa) hinsichtlich der Energie beim Bruch bewertet. Die erfindungsgemäßen Fahrzeugluftreifen wurde dabei mit drei Referenzreifen verglichen, welcher eine Reifenkarkasse mit einer herkömmlichen 1+3/4-Konstruktion aufweist. Für jeden der jeweils drei Reifen wurden die Bruchenergien als Mittelwert aus fünf Messungen an über den Umfang des Reifens verteilten Messpunkten bestimmt.

Für die erfindungsgemäßen Fahrzeugluftreifen wurden mittlere Bruchenergien von 848 J, 815 J und 835 J (Mittelwert 833 J) bestimmt, wohingegen für die Referenzreifen Bruchenergien von 740 J, 777 J und 762 J (Mittelwert 760 J) erhalten wurden.

Trotz der vorteilhaften Material- und Gewichtseinsparung wurde im Mittel über die jeweiligen drei Fahrzeugluftreifen somit überraschenderweise eine um 73 J verbesserte Bruchenergie erhalten.

### Bezugszeichenliste

- 10: Fahrzeugluftreifen
- 12: erstes Wulstelement
- 14: erste Karkasslage
- 16: zweite Karkasslage
- 18: Reifeninnenschicht
- 20: Laufstreifen
- 21: Aufstandsbereich
- 22: erster Lagenumschlag
- 24: erstes Gummielement

## Patentansprüche

1. Fahrzeugluftreifen (10), umfassend:
a) eine Reifenkarkasse mit einem ersten Wulstelement (12) und einem zweiten Wulstelement, umfassend eine erste Karkasslage (14) und eine zweite Karkasslage (16), wobei die erste Karkasslage (14) und die zweite Karkasslage (16) eine Vielzahl von gummierten Festigkeitsträgern umfassen, wobei die gummierten Festigkeitsträger der ersten Karkasslage (14) und der zweiten Karkasslage (16) bezogen auf die Umfangsrichtung des Fahrzeugluftreifens (10) einen Kordwinkel im Bereich von 78° bis 90° aufweisen,
b) eine relativ zur Reifenkarkasse radial innenliegende Reifeninnenschicht (18), und
c) einen relativ zur Reifenkarkasse radial außenliegenden Laufstreifen (20) mit einem für den Fahrbahnkontakt vorgesehenen Aufstandsbereich (21),
wobei die erste Karkasslage (14) einen zwischen dem ersten Wulstelement (12) und dem zweiten Wulstelement verlaufenden Zentralteil sowie einen ersten Lagenumschlag (22) um das erste Wulstelement (12) und einen zweiten Lagenumschlag um das zweite Wulstelement aufweist, wobei das Ende des ersten Lagenumschlags (22) und das Ende des zweiten Lagenumschlags so angeordnet sind, dass der erste Lagenumschlag (22) und der zweite Lagenumschlag abschnittsweise zwischen dem Zentralteil und dem Aufstandsbereich (21) des Laufstreifens (20) angeordnet sind,
**dadurch gekennzeichnet, dass** die zweite Karkasslage (16) zu 90 % oder mehr zwischen der Reifeninnenschicht (18) und dem Aufstandsbereich (21) des Laufstreifens (20) angeordnet ist, bezogen auf die Breite der zweiten Karkasslage (16) quer zur Umfangsrichtung.

2. Fahrzeugluftreifen (10) nach Anspruch 1, wobei die zweite Karkasslage (16) relativ zum Zentralteil der ersten Karkasslage (14) in radialer Richtung außen liegt.

3. Fahrzeugluftreifen (10) nach Anspruch 1, wobei die zweite Karkasslage (16) relativ zum Zentralteil der ersten Karkasslage (14) in radialer Richtung innen liegt.

4. Fahrzeugluftreifen (10) nach einem der Ansprüche 1 oder 2, wobei die zweite Karkasslage (16) abschnittsweise zwischen dem Zentralteil und dem ersten Lagenumschlag (22) angeordnet ist, und/oder wobei die zweite Karkasslage (16) abschnittsweise zwischen dem Zentralteil und dem zweiten Lagenumschlag angeordnet ist.

5. Fahrzeugluftreifen (10) nach einem der Ansprüche 1 oder 2, wobei die zweite Karkasslage (16) abschnittsweise relativ zum ersten Lagenumschlag (22) in radialer Richtung außen liegt, und/oder wobei die zweite Karkasslage (16) abschnittsweise relativ zum zweiten Lagenumschlag in radialer Richtung außen liegt.

6. Fahrzeugluftreifen (10) nach einem der Ansprüche 1 oder 3, wobei die zweite Karkasslage (16) abschnittsweise relativ zum ersten Lagenumschlag (22) in radialer Richtung innen liegt, und/oder wobei die zweite Karkasslage (16) abschnittsweise relativ zum zweiten Lagenumschlag in radialer Richtung innen liegt.

7. Fahrzeugluftreifen (10) nach einem der Ansprüche 1 bis 6, wobei die zweite Karkasslage (16) quer zur Umfangsrichtung eine Breite im Bereich von 0,4*A bis 0,9*A, bevorzugt im Bereich von 0,5*A bis 0,8*A, aufweist, wobei A der Abstand zwischen dem Ende des ersten Lagenumschlags (22) und dem Ende des zweiten Lagenumschlags ist.

8. Fahrzeugluftreifen (10) nach einem der Ansprüche 1 bis 7, wobei der Fahrzeugluftreifen (10) ein streifenförmiges erstes Gummielement (24) umfasst, wobei das streifenförmige erste Gummielement (24) abschnittsweise relativ zum ersten Lagenumschlag (22) und abschnittsweise relativ zur zweiten Karkasslage (16) in radialer Richtung außen liegt, und/oder wobei der Fahrzeugluftreifen (10) ein streifenförmiges zweites Gummielement umfasst, wobei das streifenförmige zweite Gummielement abschnittsweise relativ zum zweiten Lagenumschlag und abschnittsweise relativ zur zweiten Karkasslage (16) in radialer Richtung außen liegt.

9. Fahrzeugluftreifen (10) nach Anspruch 8, wobei das streifenförmige erste Gummielement (24) so angeordnet ist, dass es sich quer zur Umfangsrichtung über das Ende des ersten Lagenumschlags (22) und/oder das Ende der zweiten Karkasslage (16) erstreckt, und/oder wobei das streifenförmige zweite Gummielement so angeordnet ist, dass es sich quer zur Umfangsrichtung über das Ende des zweiten Lagenumschlags und/oder das Ende der zweiten Karkasslage (16) erstreckt.

## Claims

1. Pneumatic vehicle tyre (10), comprising:
a) a tyre carcass with a first bead element (12) and a second bead element, comprising a first carcass ply (14) and a second carcass ply (16), wherein the first carcass ply (14) and the second carcass ply (16) comprises a multiplicity of rubberized reinforcing elements, wherein the rubberized reinforcing elements of the first carcass ply (14) and of the second carcass ply (16) have with respect to the circumferential direction of the pneumatic vehicle tyre (10) a cord angle in the range of 78° to 90°,
b) a tyre inner layer (18), which is on the inside radially relative to the tyre carcass, and
c) a tread (20), which is on the outside radially relative to the tyre carcass and has a contact area (21) intended for contact with the roadway,
wherein the first carcass ply (14) has a central part, extending between the first bead element (12) and the second bead element, as well as a first ply turn-up (22) around the first bead element (12) and a second ply turn-up around the second bead element, wherein the end of the first ply turn-up (22) and the end of the second ply turn-up are arranged such that the first ply turn-up (22) and the second ply turn-up are arranged partly between the central part and the contact area (21) of the tread (20),
**characterized in that** 90% or more of the second carcass ply (16) is arranged between the tyre inner layer (18) and the contact area (21) of the tread (20), with respect to the width of the second carcass ply (16) transversely to the circumferential direction.

2. Pneumatic vehicle tyre (10) according to Claim 1, wherein the second carcass ply (16) lies on the outside in the radial direction relative to the central part of the first carcass ply (14).

3. Pneumatic vehicle tyre (10) according to Claim 1, wherein the second carcass ply (16) lies on the inside in the radial direction relative to the central part of the first carcass ply (14).

4. Pneumatic vehicle tyre (10) according to either of Claims 1 and 2, wherein the second carcass ply (16) is arranged partly between the central part and the first ply turn-up (22), and/or wherein the second carcass ply (16) is arranged partly between the central part and the second ply turn-up.

5. Pneumatic vehicle tyre (10) according to either of Claims 1 and 2, wherein the second carcass ply (16) lies on the outside in the radial direction partly relative to the first ply turn-up (22), and/or wherein the second carcass ply (16) lies on the outside in the radial direction partly relative to the second ply turn-up.

6. Pneumatic vehicle tyre (10) according to either of Claims 1 and 3, wherein the second carcass ply (16) lies on the inside in the radial direction partly relative to the first ply turn-up (22), and/or wherein the second carcass ply (16) lies on the inside in the radial direction partly relative to the second ply turn-up.

7. Pneumatic vehicle tyre (10) according to one of Claims 1 to 6, wherein the second carcass ply (16) has transversely to the circumferential direction a width in the range of 0.4*A to 0.9*A, preferably in the range of 0.5*A to 0.8*A, where A is the distance between the end of the first ply turn-up (22) and the end of the second ply turn-up.

8. Pneumatic vehicle tyre (10) according to one of Claims 1 to 7, wherein the pneumatic vehicle tyre (10) comprises a strip-shaped first rubber element (24), wherein the strip-shaped first rubber element (24) lies on the outside in the radial direction partly relative to the first ply turn-up (22) and partly relative to the second carcasss ply (16), and/or wherein the pneumatic vehicle tyre (10) comprises a strip-shaped second rubber element, wherein the strip-shaped second rubber element lies on the outside in the radial direction partly relative to the second ply turn-up and partly relative to the second carcass ply (16).

9. Pneumatic vehicle tyre (10) according to Claim 8, wherein the strip-shaped first rubber element (24) is arranged such that it extends transversely to the circumferential direction beyond the end of the first ply turn-up (22) and/or the end of the second ply turn-up (16), and/or wherein the strip-shaped second rubber element is arranged such that it extends transversely to the circumferential direction beyond the end of the second ply turn-up and/or the end of the second carcass ply (16).

## Revendications

1. Pneu de véhicule (10), comprenant :
a) une carcasse de pneu avec un premier élément de talon (12) et un deuxième élément de talon, comprenant une première couche de carcasse (14) et une deuxième couche de carcasse (16), la première couche de carcasse (14) et la deuxième couche de carcasse (16) comprenant une pluralité de supports de résistance caoutchoutés, les supports de résistance caoutchoutés de la première couche de carcasse (14) et de la deuxième couche de carcasse (16) présentant, par rapport à la direction circonférentielle du pneu de véhicule (10), un angle de corde dans la plage de 78° à 90°,
b) une couche intérieure de pneu (18) située radialement à l'intérieur par rapport à la carcasse du pneu, et
c) une bande de roulement (20) située radialement à l'extérieur par rapport à la carcasse de pneu, avec une zone d'appui (21) prévue pour le contact avec la chaussée,
la première couche de carcasse (14) présentant une partie centrale s'étendant entre le premier élément de talon (12) et le deuxième élément de talon, ainsi qu'un premier retournement de couche (22) autour du premier élément de talon (12) et un deuxième retournement de couche autour du deuxième élément de talon, l'extrémité du premier retournement de couche (22) et l'extrémité du deuxième retournement de couche étant agencées de telle sorte que le premier retournement de couche (22) et le deuxième retournement de couche sont agencés par sections entre la partie centrale et la zone d'appui (21) de la bande de roulement (20),
**caractérisé en ce que** la deuxième couche de carcasse (16) est agencée à 90 % ou plus entre la couche intérieure de pneu (18) et la zone d'appui (21) de la bande de roulement (20), par rapport à la largeur de la deuxième couche de carcasse (16) transversalement à la direction circonférentielle.

2. Pneu de véhicule (10) selon la revendication 1, dans lequel la deuxième couche de carcasse (16) est située à l'extérieur dans la direction radiale par rapport à la partie centrale de la première couche de carcasse (14).

3. Pneu de véhicule (10) selon la revendication 1, dans lequel la deuxième couche de carcasse (16) est située à l'intérieur dans la direction radiale par rapport à la partie centrale de la première couche de carcasse (14).

4. Pneu de véhicule (10) selon l'une quelconque des revendications 1 ou 2, dans lequel la deuxième couche de carcasse (16) est agencée par sections entre la partie centrale et le premier retournement de couche (22), et/ou dans lequel la deuxième couche de carcasse (16) est agencée par sections entre la partie centrale et le deuxième retournement de couche.

5. Pneu de véhicule (10) selon l'une quelconque des revendications 1 ou 2, dans lequel la deuxième couche de carcasse (16) est située par sections à l'extérieur par rapport au premier retournement de couche (22) dans la direction radiale, et/ou dans lequel la deuxième couche de carcasse (16) est située par sections à l'extérieur par rapport au deuxième retournement de couche dans la direction radiale.

6. Pneu de véhicule (10) selon l'une quelconque des revendications 1 ou 3, dans lequel la deuxième couche de carcasse (16) est située par sections à l'intérieur par rapport au premier retournement de couche (22) dans la direction radiale, et/ou dans lequel la deuxième couche de carcasse (16) est située par sections à l'intérieur par rapport au deuxième retournement de couche dans la direction radiale.

7. Pneu de véhicule (10) selon l'une quelconque des revendications 1 à 6, dans lequel la deuxième couche de carcasse (16) présente, transversalement à la direction circonférentielle, une largeur comprise entre 0,4*A et 0,9*A, de préférence entre 0,5*A et 0,8*A, A étant la distance entre l'extrémité du premier retournement de couche (22) et l'extrémité du deuxième retournement de couche.

8. Pneu de véhicule (10) selon l'une quelconque des revendications 1 à 7, dans lequel le pneu de véhicule (10) comprend un premier élément en caoutchouc en forme de bande (24), le premier élément en caoutchouc en forme de bande (24) étant situé à l'extérieur dans la direction radiale par sections par rapport au premier retournement de couche (22) et par sections par rapport à la deuxième couche de carcasse (16) et/ou dans lequel le pneu de véhicule (10) comprend un deuxième élément en caoutchouc en forme de bande, le deuxième élément en caoutchouc en forme de bande étant situé à l'extérieur dans la direction radiale par sections par rapport au deuxième retournement de couche et par sections par rapport à la deuxième couche de carcasse (16).

9. Pneu de véhicule (10) selon la revendication 8, dans lequel le premier élément en caoutchouc en forme de bande (24) est agencé de manière à s'étendre transversalement à la direction circonférentielle sur l'extrémité du premier retournement de couche (22) et/ou l'extrémité de la deuxième couche de carcasse (16), et/ou dans lequel le deuxième élément en caoutchouc en forme de bande est agencé de manière à s'étendre transversalement à la direction circonférentielle sur l'extrémité du deuxième retournement de couche et/ou l'extrémité de la deuxième couche de carcasse (16).
